# NEUE EUROPÄISCHE PATENTSCHRIFT

(11) **EP 0 491 184 B2**
(45) Veröffentlichungstag und Bekanntmachung des Hinweises auf die Entscheidung über den Einspruch: **15.04.1998**
(45) Hinweis auf die Patenterteilung: 31.05.1995
(21) Anmeldenummer: 91120027.7
(22) Anmeldetag: 25.11.1991
(51) Int. Cl.: C04B 35/10, C09K 3/14, B24D 3/14

(54) **Gesinterter Verbundschleifkörper, Verfahren zu seiner Herstellung sowie dessen Verwendung**
Sintered composite abrasive body, method of preparation and use thereof
Corps composite fritté abrasif, procédé de préparation et utilisation

(30) Priorität: 17.12.1990 DE 4039021; 11.06.1991 DE 4119183
(43) Veröffentlichungstag der Anmeldung: 24.06.1992
(73) Patentinhaber: KORUND LAUFENBURG GmbH, 79725 Laufenburg (DE)
(72) Erfinder: Winter, Gerhard, Prof. Dr., W-3387 Vienenburg (DE); Möltgen, Paul, Dr., W-7887 Laufenburg (DE); Fister, Dietmar, Dr., W-7886 Murg (DE)
(74) Vertreter: Patentanwälte Westphal, Buchner, Mussgnug Neunert, Göhring

(56) Entgegenhaltungen:
- EP-A- 152 768
- EP-A- 0 273 569
- EP-A- 0 311 289
- EP-A- 0 324 513
- EP-A- 0 395 087
- DE-A- 2 919 370
- DE-A- 3 010 545
- JP-A- 5 622 676
- JP-A-61 021 964
- US-A- 3 580 708
- US-A- 4 623 364
- US-A- 4 957 886
- Römps Chemie Lexikon, S. 3096, 3219 (1975)
- R.P. Wahi et al; Journal of Materials Science 15 (1980) S.875-885
- R.A. Cutler et al; Pressureless-sintered Al2O3-TiC Composites; Materials Science and Engineering, A 105/106 (1988) S. 183-192
- Scharfes Korn; Maschinenmarkt, Würzburg 95 (1989) 44, S. 36-39
- Grinding; Manufacturing Engineer (May 1990), S. 15-17
- An Information in grinding...; Norton Informationsblatt, Form Nr.5795 CXM RAP, Revised 10/88

## Beschreibung

Die vorliegende Erfindung betrifft einen gesinterten Verbundschleifkörper auf der Basis einer a-AI₂0₃-Matrix und mindestens eines Hartstoffes, Verfahren zur Herstellung des gesinterten Verbundschleifkörpers sowie dessen Verwendung.

Aufgrund ihrer hohen Zähigkeit und ihrer spanabhebenden Wirkung kommt den Verbundkörpern eine große Bedeutung als Schneidkeramik zu. Gesinterte Verbundkörper auf Al₂O₃-Basis mit eingelagerten Hartstoffen sind Gegenstand der DE-A 1 671 095, DE-A 2 471 295 und DE-A 3 529 265. Lee und Kim beschreiben die Herstellung von AI₂0₃-TiC-Verbundkörpern durch druckloses Sintern in J. Am. Ceram. Soc., 72 (8), 1333-37(1989). Al₂O₃-SiC-Verbundkörper gehen aus den EP-A 0311 289, FR-A 2 349 633 und FR-A 2 430 445 hervor.

Durch Sintern entsprechender pulverförmiger Ausgangsstoffe bei Temperaturen zwischen 1500°C und 1900°C erhält man nach der EP-B 0 317 147 einen Al₂O₃-Verbundkörper. Das System Al₂O₃-Al₄C₃-AlN sowie die Bildung von Oxycarbiden und Oxynitriden des Aluminiums werden in J. Am. Ceram. Soc., 72 (9), 1704-709 (1989) beschrieben.

SiC-Whisker-Reinforced Ceramics sind Gegenstand einer Veröffentlichung von Wei und Becher in Am. Ceram. Soc. Bull. 64(2) 298 - 304 (1985).

Das System AI₂0₃-AI₄C₃-AIN sowie die Bildung von Oxycarbiden und Oxynitriden des Aluminiums werden in J. Am. Ceram. Soc., 72 (9), 1704-709 (1989) beschrieben.

AI₂0₃-B₄C-Sinterkörper werden von K.C. Radford in J. Mater. Sci., 18, No. 3, 669-678 (1983) vorgestellt.

Werkstoffe, bei denen u.a. auch Carbonitride (Mischphasen aus Nitriden und Carbiden) in die Al₂O₃-Matrix eingebaut werden, sind Gegenstand der US-A 4.320.203.

In der US-A-4.325.710 werden Materialien beschrieben, deren Matrix mit TiN, Zr und ZrC dotiert ist.

Yamamoto, Sakurai und Tanaka beschreiben in der US-A 4.204.873 keramische Werkstoffe, deren Struktur durch den Einbau von WC oder W₂C in Kombination mit anderen Hattstoffen, verstärkt wird.

Bei all diesen beschriebenen Verfahren mischt man die Ausgangsstoffe in Form ihrer Pulver, verpreßt die Mischung und sintert den Pressling bei relativ hohen Temperaturen. In einigen Fällen arbeitet man zusätzlich unter Druck und Inertgas. Die Kristallitgröße der Al₂O₃-Matrix heträgt dabei in keinem Fall unter 1 µm.

Die Sclileifleistung der nach diesem Verfahren erhaltenen Keramik erfüllt nicht die hohen Anforderungen, die heute an moderne Schleifmittel gestellt werden.

Darüber hinaus werden auch Verfahren beschrieben, über die Schmelze zu A1₂0₃-Verbundkörpern zu gelangen. So werden Einlagerungsverbindungen von AI₄0₄C und AI₂0C in einer Al₂O₃-Matrix durch Schmelzen und kontrolliertes Abkühlen eines Gemisches von Al₂O₃ mit einem Kohlenstoffträger erhalten (EP-A 0 022 420, AT-A 379 979). Ein Verbundkörper, in dem neben den Oxycarbiden auch Oxynitride enthalten sind, wird in der FR-A 2 628 414 beschrieben. Ein Verbundkörper aus AI₂0₃ und B₄C wurde bereits 1902 nach der DE-C 152 501 durch Schmelzen im elektrischen Widerstandsofen hergestellt. Die DE-B 1 049 290 beschreibt ein Schleifmittel auf Basis von Al₂O₃ mit eingelagertem TiC, das ebenfalls über die Schmelze erhalten wird.

Verglichen mit den oben beschriebenen Sinterkörpern ist die Al₂O₃-Matrix in den erschmolzenen Materialien noch wesentlich grobkristalliner.

Aus der EP-O 311 289 A1 gehen Al₂O₃-Sinterkörper mit feinen SiC-Einlagerungen hervor. Dabei sind diese SiC-Einlagerungen so fein, daß sie nicht als Ursprung für einen Bruch infrage kommen und der Sinterkörper somit seine Zähigkeit behält. Die SiC-Teilchen sollen nicht größer als 0,5 µm sein. Ein entsprechend hergestellter Sinterkörper ist als Schleifkorn nicht geeignet.

In der EP-O 324 513 A1 wird darauf hingewiesen, daß das dort beschriebene Produkt aufgrund seiner nicht-zellularen Struktur mit a-AI₂0₃-Primärkristalliten von 0,2-0,4 Micron-Durchmesser Vorteile gegenüber den bisher bekannten Sol-Gel-Schleifkörpern aufweist. Die im Beispiel 1 erwähnten gröberen Bereiche sind ungewollte Verunreinigungen, die die Brauchbarkeit des Korns herabsetzen, wie in den Beispielen IV-IX, Seite 4, Zeilen 51-53 erläutert ist. Als Sollbruchstellen oder als Schleifstoffe, die den Schleifprozeß im Sinne der vorliegenden Erfindung steuern und eigenständig beeinflussen, sind die erwähnten lath-like coarse crystals nicht geeignet.

In der EP-O 395 087 A2 wird ein gebundener Schleifkörper, in diesem Fall eine Schleifscheibe, offenbart, die aus gesinterten Al₂O₃-KÖrnern aufgebaut ist.

Aus der DE-A-29 19 370 sind Sinterkörper bekannt, die durch Heißverpressen von a-AI₂0₃- und Hartstoffpulvern vergleichbarer Korngröße erhalten werden. Entsprechend homogene Sinterkörper werden als Schneidkeramiken eingesetzt.

Aufgabe dieser Erfindung ist somit die Bereitstellung von Schleifmitteln, die die beschriebenen Nachteile der eingangs erwähnten keramischen Werkstoffe nicht aufweisen.

Diese Anforderungen werden erfüllt durch einen gesinterten Verbundschleifkörper auf der Basis einer a-AI₂0₃-Matrix und mindestens eines Hartstoffes, wobei die durchschnittliche Primärkristallitgrößen des α-Al₂O₃ im Bereich von 0,1 bis <1 µm liegen und die Hartstoffe isometrische Körner sind, welche durchschnittliche Korngrößen im Bereich von 10 bis 70 µm aufweisen und die Menge der Hartstoffe 1 bis 30 Gew.-%, bezogen auf den gesinterten Verbundschleifkörper, beträgt. Ein solcher gesinterter Verbundschleifkörper ist Gegenstand dieser Erfindung.

Durch die Submicron-Struktur des erfindungsgemäßen Verbundschleifkörpers bedingt werden besondere schleiftechnische Vorteile erzielt.

Bei bestimmten Schleifprozessen brechen in Abhängigkeit vom Anpreßdruck kleinere Bereiche aus dem Schleifkorn. Es kommt so zur Ausbildung neuer Schneidkanten. Durch diesen Selbstschärfemechanismus wird die Schleifleistung des gesinterten mikrokristallinen Schleifkorns gegenüber herkömmlichen, geschmolzenen oder gesinterten Schleifkörnern erheblich gesteigert.

In einer bevorzugten Ausführungsform dieser Erfindung wurde die a-AI₂0₃-Matrix über das Sol-Gel-Verfahren erhalten. Dabei handelt es sich bei den Hartstoffen um isometrische Körner. Besonders gute Eigenschaften wurden erzielt, wem die Hartstoffe Korngrößen im Bereich von 10 bis 50 µm aufweisen.

Diese erfindungsgemäß bevorzugten Hartstoffe sind dabei einer oder mehrere der Verbindungsklassen der Carbide, Silizide, Oxide, Boride, Nitride oder Mischphasen dieser Hartstoffe wie Oxycarbide, Oxynitride, Carbonitride oder andere Kombinationen wie z.B. Sialone.

Durch den Einbau der Hartstoffe in die Al₂O₃-Matrix sind Sollbruchstellen vorgezeichnet, so daß der Selbstschärfemechanismus auch bei Materialien auftritt, deren mikrokristalliner Aufbau gröber ist als die Struktur von üblichen Sol-Gel-Korunden. Ein Vorteil der erfindungsgemäßen Verbundschleifkörper ist demnach, daß man nicht mehr auf Sinteradditive, Kristallisationskeime oder sonstige Manipulationen angewiesen ist, um zu dem erwünschten Selbstschärfemechanismus zu kommen.

Weiterhin ist vorteilhaft, daß neben der Al₂O₃-Matrix auch der Hartstoff als Schleifmittel wirkt. Da die verwendeten Hartstoffe in der Regel in mindestens einer schleiftechnisch wichtigen Eigenschaft (Harter, Zähigkeit, Wärmeleitfähigkeit o.a.) den Korund übertreffen, ihre bisweilen mangelhafte thermische oder chemische Beständigkeit aber auf Grund der Struktur des Verbundkörpers nicht ins Gewicht fällt, kommt es zu einer weiteren Leistungssteigerung im Vergleich zu den einfachen Sol-Gel-Korunden.

Ohne zusätzlichen Einsatz von Sinteradditiven und/oder Kristallisationskeimen kann man einen Verbundkörper erhalten, dessen Matrix aus Al₂O₃-Kristalliten aufgebaut ist, deren Primärkristallgröße bevorzugt unter 0,4 αm liegt. Ein solcher Verbundschleifkörper vereint die Vorteile der Sol-Gel-Korunde mit denen keramischer Verbundkörper bzw. der oben beschriebenen Schleifkorn-Agglomerate.

Durch zusätzlichen Einsatz von Sinteradditiven und/oder Kristallisationskeimen gelingt es, die Kristallitgröße in der A1₂0₃-Matrix bevorzugt unter 0,2 µm zu halten.

Besonders bevorzugte Hartstoffe im Sinne dieser Erfindung sind einer oder mehrere der Gruppe SiC, TiB₂, A1₂0₃, TiC, AION, Si₃N₄, SiAION, TiN, B₄C, TiCN, WTiC, WC, Cr₃C₂, VC, AIN, TaC, NbC, W₂C, VMeC, TiMeC, wobei Me = Metalle der Gruppen 4a, 5a, 6a des PSE und CrAIC sind.

Überraschend wurde beim Einsatz von Carbiden als erfindungsgemäß bevorzugte Hartstoffe gefunden, daß selbst im Vergleich zur angestrebten Matrix grobkristalline Hartstoffe das Kristallwachstum der A1₂0₃-Matrix günstig beeinflußen und eine hervorragende Wirkung als Kristallwachstumsinhibitoren besitzen. In vielen Fällen ist die Inhibitorwirkung der carbidhaltigen Hartstoffe deutlich besser als die aus der Literatur bekannten und häufig beschriebenen Cr₂O₃, Ti0₂, Si0₂, MgO, NiO, ZnO, CoO, Fe₂0₃ o.a. bzw. deren Vorstoffe.

Carbide sind als Kristallwachstumsinhibitoren oder Sinteradditive für Al₂0₃-Keramiken bisher nicht beschrieben.

Beste Ergebnisse wurden erzielt, wenn der Hartstoff SiC ist. Dies gilt auch für WC. Ebenso vorteilhaft kann TiC sein.

Die erfindungsgemäßen Verbundschleilkörper zeichnen sich durch eine enorme Vielseitigkeit aus, da man je nach Anwendungszweck durch einfache Variation der Korngröße des Hartstoffes, der Menge und Art des Hartstoffes sowie durch zusätzlichen Einsatz von Sinteradditiven gezielt eines der Funktionsprinzipien der o.g. Spezies in den Vordergrund rücken kann und so die Möglichkeit hat, für eine Vielzahl von Schleifoperationen das optimale Schleifkorn zu entwickeln.

Gegenüber reinen Hartstoffen haben die erfindungsgemäßen Verbundschleifkörper den Vorteil, daß aufgrund ihres Gefügeaufbaus der Schleifeffekt der Hartstoffe genutzt werden kann, ohne daß die Nachteile der Hartstoffe (Sprödigkeit, Temperaturempfindlichkeit, mangelhafte chemische Resistenz u.a.) ins Gewicht fallen.

Die schleifaktive Wirkung der Submicron-alpha-AI₂0₃-Matrix bringt den erfindungsgemäßen Verbundschleifkörpern beim Schleifprozeß Vorteile gegenüber den herkömmlichen Schneidkeramiken, die außerdem den Nachteil haben, daß sie nur unter großem Aufwand zu einer Schieifkörnung aufbereitet werden können.

In der DE-A 2 414 047 werden zwar Kompositschleifmaterialien beschrieben, die über das Sol-Gel-Verfahren hergestellt werden. Es geht dort darum, äußerst feine Schleilkörnungen verarbeitbar zu machen. Die Matrix die aus Si0₂, A1₂0₃, Ti0₂, Zr0₂ oder Gemischen daraus bestehen kann, ist jedoch mikroporös und nicht gesintert und nimmt an dem Schleifprozeß nicht teil.

Bei den erfindungsgemäßen Verbundschleifkörpern hingegen besitzt die Matrix bevorzugt eine Dichte von über 98 % der Theorie, eine Härte größer als 19 GPa (HV 200) (Vickers) und nimmt aufgrund ihrer mikrokristallinen Struktur aktiv am Schleifprozeß teil. Ein weiterer Vorteil der erfindungsgemäßen Verbundschleifkörper ist, daß sie wesentlich höheren Anpreßdrücken ausgesetzt werden können. Einsatzmöglichkeit und Leistungsfähigkeit gehen daher weit über die der in DE-A 2 414 047 beschriebenen Verbindungen hinaus.

In der US-A 4 855 264 werden Verbund-Schleifkörper auf Basis AI₂0₃/AION beschrieben, die über das Sol-Gel-Verfahren und anschließendem Reaktionssintern zum AION hergestellt werden.

Nachteile des Verfahrens sind:
- hohe Sintertemperaturen (1600°C-2000°C), die zu einem Kristallwachstum auf mindestens 2 µm führen
- teure Ausgangsstoffe
- aufwendige Verfahrenstechnik mit vielen Verfahrensschritten.

Aus der US-A 4 844 848 gehen Keramik-Verbundkörper auf der Basis von AI₂0₃-Gel-Pulver mit 5 bis 90 Gew.-% Zusatzstoffen, insbesondere SiC-Whiskern hervor. Aufgrund ihrer Herstellungsprozesse sind diese Keramik-Verbundkörper aber nicht mikrokristallin. Sie weisen nicht die für die erfindungsgemäßen Verbundschleifkörper notwendige Eigenschaft der Anfälligkeit für eine Rißbildung auf.

Darüber hinaus ist das Verfahren komplizierter und damit teurer, da man eine Zwischenstufe isoliert und einen zusätzlichen Verfahrensschritt (Verpressen) einfügt. Dadurch gehen die für die Herstellung eines Schleifmittels relevanten Vorteile des direkten Sol-Gel-Verfahrens teilweise verloren, da das Gel durch den Trocknungsprozeß seine überragende Sinteraktivität, die man auf Polykondensationsreaktionen im wäßrigen Sel- bzw. Gel-Zustand zurückführt, teilweise einbüßt.

Gegenstand dieser Erfindung ist auch ein Verfahren zur Herstellung des erfindungsgemäßen gesinterten Verbundschleifkörpers, wobei ein üblicherweise hergestelltes Al₂O₃-Sol oder -Gel mit Hartstoffpartikeln definierter Korngröße versetzt, anschließend getrocknet kalziniert und gesintert wird.

Im Gegensatz zum Verfahren der US-A 4 844 848 wird beim erfindungsgemäßen Verfahren der Hartstoff dem Sol bzw. Gel direkt zugegeben. Das Sol bzw. Gel wird homogenisiert, im Falle des Sols geliert, getrocknet, kalziniert und gesintert.

Bei Verwendung von oxidationsempfindlichen Hartstoffen sollte im Vakuum und/oder unter Inertgas gearbeitet werden. Hydrolyseempfindliche Hartstoffe werden bevorzugt vor ihrem Einsatz im Sol-Gel-Prozeß in einem organischen Lösungsmittel (z.B. Aceton oder Alkohole), das mit Wasser mischbar ist dispergiert.

In einigen Fallen ist eine partielle Oxidation durchaus erwünscht, wenn es zur Bildung von Oxycarbiden oder Oxynitriden kommt, die als Hartstoffe im Sinne der Erfindung anzusehen sind.

Stoffe, die sich trotz dieser Vorsichtsmaßnahmen unkontrolliert zersetzen bzw. vollständig oxidiert werden und dadurch als Hartstoff im Sinne der Erfindung nicht mehr geeignet sind, müssen über kompliziertere Verfahren verarbeitet werden.

Gegenstand dieser Erfindung ist auch die Verwendung der erfindungsgemäßen gesinterten Verbundschleifkörper zur Herstellung von Schleifmitteln oder Schleifwerkzeugen.

Im folgenden wird die Erfindung beispielhaft erläutert.

### Beispiel 1

500 g Aluminiumoxidmonohydrat (Disperal der Fa. Condea) wurden in 2 I Wasser unter Zusatz von Säure (HN0₃) dispergiert. Die Suspension wurde zentrifugiert, um den nicht dispergierten Anteil an Ausgangsstoff (ca. 2 %) abzutrennen. Unter ständigem Rühren wurde die Suspension zum Sieden erhitzt und mit 14,4 g SiC (P600 der Fa. Elektroschmelzwerk Kempten) versetzt. Schon beim Erwärmen zeigte sich eine deutliche Zunahme der Viskosität des Sols, was sich bei der Zugabe des Hartstoffes weiter verstärkte. Einige Minuten nach vollständiger Zugabe des Hartstoffes war der Gelierungsprozeß abgeschlossen. Das Gel wurde bei 65°C im Trockenschrank getrocknet. Das getrocknete Gel wurde bei 600°C kalziniert und 4 Stunden bei 1350°C gesintert.

Der Verbundschleifkörper kann vor oder nach dem Sintern auf die gewünschte Korngröße zerkleinert werden.

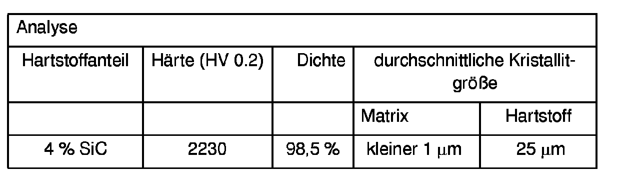

### Schleiftests

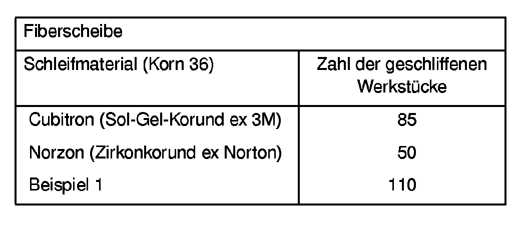

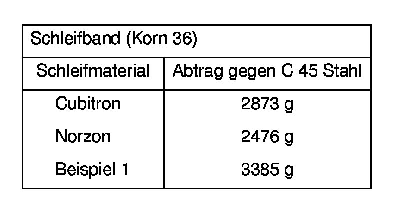

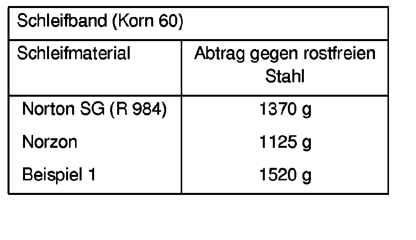

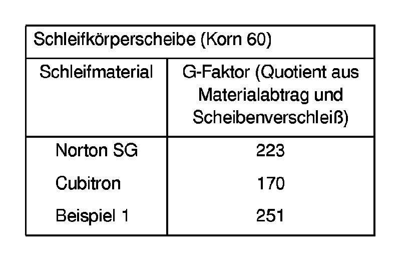

### Beispiel 2

Die Präparation des Verbundschleifkörpers erfolgte wie in Beispiel 1.

An Stelle von SiC wurden 18 g TiB₂ (Hersteller Hermann C. Starck) zugegeben.

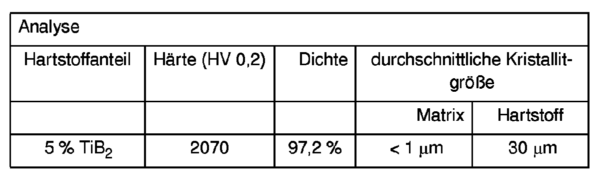

### Schleiftest

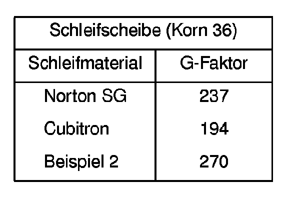

### Beispiel 3

Wie in Beispiel 1. Als Hartstoff wurden 18 g TiCN zugegeben.

Kalziniert wurde bei 600°C in einer N₂-Atmosphäre. Es folgte eine Sinterung bei 1350°C unter Helium.

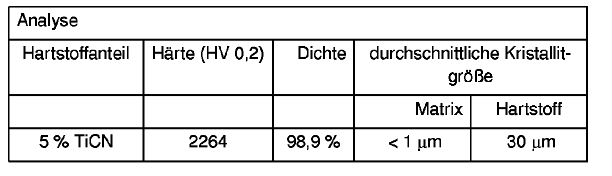

### Schleiftest

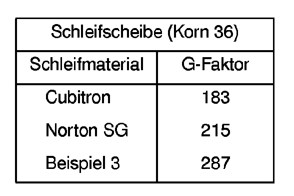

### Beispiel 4

### Wie Beispiel 3.

An Stelle von TiCN wurden 18 g TiC zugegeben (Hersteller Hermann C. Starck).

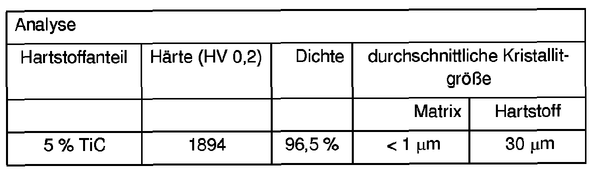

### Schleiftest

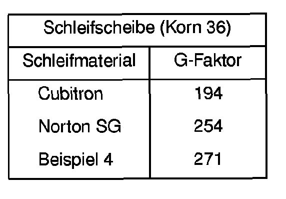

### Beispiel 5

### Wie Beispiel 3.

Es wurden 36 g TiCN zugegeben.

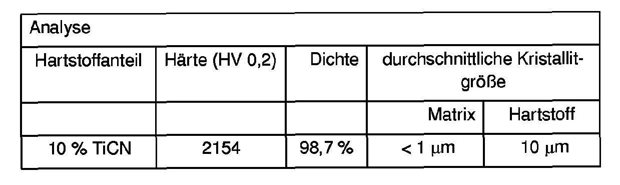

### Schleiftest

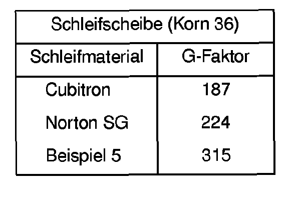

### Beispiel 6

### Wie Beispiel 3.

Es wurden 36 g WC zugegeben.

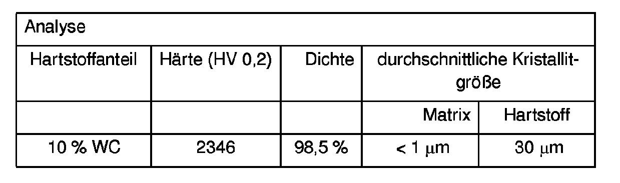

### Schleiftest

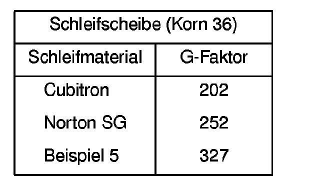

## Patentansprüche (Patentansprüche für folgende(n) Vertragsstaat(en) : AT, CH, DE, FR, GB, IT, LI, NL, SE)

1. Gesinterter Verbundschleifkörper auf der Basis einer a-AI₂0₃-Matrix und mindestens eines Hartstoffes, dadurch gekennzeichnet, daß die durchschnittliche Primärkristallitgröße des α-Al₂O₃ im Bereich 0,1 bis 1 µm beträgt und die Hartstoffe isometrische Körner sind, welche durchschnittliche Korngrößen im Bereich von 10 bis 70 µm aufweisen und die Menge der Hartstoffe 1 bis 30 Gew.-%, bezogen auf den gesinterten Verbundschleifkörper, beträgt.

2. Gesinterter Verbundschleifkörper gemaß Anspruch 1, dadurch gekennzeichnet, daß die Korngrößen der Hartstoffe 10 bis 50 pm betragen.

3. Gesinterter Verbundschleifkörper gemäß einem der Ansprüche 1 oder 2, dadurch gekennzeichnet, daß die a-Al₂O₃-Matrix über das Sol-Gel-Verfahren erhalten wurde.

4. Gesinterter Verbundschleifkörper gemäß einem oder mehreren der Ansprüche 1 bis 3, dadurch gekennzeichnet, daß die Hartstoffe einer oder mehrere der Verbindungsklassen der Carbide, Silizide, Oxide, Boride, Nitride oder Mischphasen dieser Harrstoffe wie Oxycarbide, Oxynitride, Carbonitride oder andere Kombinationen davon sind.

5. Gesinterter Verbundschleiikörper gemäß einem oder mehreren der Ansprüche 1 bis 4, dadurch gekennzeichnet, daß die Hartstoffe einer oder mehrere der Gruppe SiC, TiB₂, Al₂O₃, TiC, AION, SI₃N₄, B₄C, TiN, TiCN, WC, Cr₃C₂, VC, AIN, WTiC, SiAION, TaC, NbC, W₂C, VMeC, TiMeC, wobei Me = Metalle der Gruppen 4a, 5a, 6a des PSE und CrAIC sind.

6. Gesinterter Verbundschleilkörper gemäß einem oder mehreren der Ansprüche 1 bis 4, dadurch gekennzeichnet, daß der Hartstoff aus der Gruppe der Carbide ist.

7. Gesinterter Verbundschleifkörper gemäß Anspruch 6, dadurch gekennzeichnet, daß der Hartstoff SiC ist.

8. Gesinterter Verbundschleifkörper gemäß Anspruch 6, dadurch gekennzeichnet, daß der Hartstoff TiC ist.

9. Gesinterter Verbundschleifkörper gemäß Anspruch 6, dadurch gekennzeichnet, daß der Hartstoff WC ist.

10. Verfahren zur Herstellung gesinterter Verbundschleifkörper gemäß einem oder mehreren der Ansprüche 1 bis 9, dadurch gekennzeichnet, daß ein üblicherweise hergestelltes Al₂O₃-Sol oder -Gel mit Hartstoffpartikeln gesintert wird.

11. Verwendung der gesinterten Verbundschleifkörper gemäß einem oder mehreren der Ansprüche 1 bis 9 zur Herstellung von Schleifmitteln oder Schleifwerkzeugen.

## Patentansprüche (Patentansprüche für folgende(n) Vertragsstaat(en) : ES, GR)

1. Verfahren zur Herstellung gesinterter Verbundschleifkörper auf der Basis einer a-AI₂0₃-Matrix und mindestens eines Hartstoffes durch Sintern eines üblicherweise hergestellten Al₂O₃-Sols oder -Gels mit Hartstoffpartikeln, dadurch gekennzeichnet, daß die durchschnittliche Primärkristallitgröße des α-Al₂O₃ im Bereich 0,1 bis < 1 µm beträgt und die Hartstoffe isometrische Körner sind, welche durchschnittliche Korngrößen im Bereich 10 bis 70 µm aufweisen und die Menge der Hartstoffe 1 bis 30 Gew.-%, bezogen auf den gesinterten Verbundschleifkörper, beträgt.

2. Verfahren gemäß Anspruch 1, dadurch gekennzeichnet, daß die Korngrößen der Hartstoffe 10 bis 50 µm betragen.

3. Verfahren gemäß Ansprüchen 1 oder 2, dadurch gekennzeichnet, daß die a-AI₂0₃-Matrix über das Sol-Gel-Verfahren erhalten wurde.

4. Verfahren gemäß einem oder mehreren der Ansprüche 1 bis 3, dadurch gekennzeichnet, daß die Hartstoffe einer oder mehrere der Verbindungsklassen der Carbide, Silizide, Oxide, Boride, Nitride oder Mischphasen dieser Hartstoffe wie Oxycarbide, Oxynitride, Carbonitride oder andere kombinationen davon sind.

5. Verfahren gemäß einem oder mehreren der Ansprüche 1 bis 4, dadurch gekennzeichnet, daß die Hartstoffe einer oder mehrere der Gruppe SiC, TiB₂, Al₂O₃, TiC, AION, Si₃N₄, B₄C, TiN, TiCN, WC, Cr₃C₂, VC, AIN, WTiC, SiAI0N, TaC, NbC, W₂C, VMeC, TiMeC, wobei Me = Metalle der Gruppen 4a, 5a, 6a des PSE und CrAIC sind.

6. Verfahren gemäß einem oder mehreren der Ansprüche 1 bis 5, dadurch gekennzeichnet, daß der Hartstoff aus der Gruppe der Carbide ist.

7. Verfahren gemäß Anspruch 6, dadurch gekennzeichnet, daß der Hartstoff SiC ist.

8. Verfahren gemäß Anspruch 6, dadurch gekennzeichnet, daß der Hartstoff TiC ist.

9. Verfahren gemäß Anspruch 6, dadurch gekennzeichnet, daß der Hartstoff WC ist.

10. Verwendung der gesinterten Verbundschleifkörper gemaß einem oder mehreren der Ansprüche 1 bis 9 zur Herstellung von Schleifmitteln oder Schleifwerkzeugen.

## Claims (Claims for the following Contracting State(s) : AT, CH, DE, FR, GB, IT, LI, NL, SE)

1. Sintered composite abrasive substance based on an α-Al₂O₃ matrix and at least one hard substance, characterised in that the average primary crystallite size in the a-A1₂0₃ is in the range 0.1 to <1 µm, and the hard substances consist of isometric grains with an average particle size in the range 10 to 70 µm and the amount of hard substance is 1 to 30 wt.%, with reference to the sintered composite abrasive substance.

2. Sintered composite abrasive substance according to Claim 1, characterised in that the particle size of the hard substance is 10 to 50 µm.

3. Sintered composite abrasive substance according to one of Claims 1 or 2, characterised in that the α-Al₂O₃ matrix was obtained using the sol-gel process.

4. Sintered composite abrasive substance according to one or more of Claims 1 to 3, characterised in that the hard substances are from one or more of the compound classes comprising carbides, silicides, oxides, borides, nitrides or mixed phases of these hard substances such as oxycarbides, oxynitrides, carbonitrides, or other combinations thereof.

5. Sintered composite abrasive substance according to one or more of Claims 1 to 4, characterised in that the hard substances are from one or more of the groups SiC, TiB₂, AI₂0₃, TiC, AION, S'₃N₄, B₄C, TiN, TiCN, WC, Cr₃C₂, VC, AIN, WTiC, SiAION, TaC, NbC, W₂C, VMeC, TiMeC, wherein Me = metals from the groups 4a, 5a, 6a of the Periodic System of Elements, and CrAIC.

6. Sintered composite abrasive substance according to one or more of Claims 1 to 4, characterised in that the hard substance is from the group of carbides.

7. Sintered composite abrasive substance according to Claim 6, characterised in that the hard substance is SiC.

8. Sintered composite abrasive substance according to Claim 6, characterised in that the hard substance is TiC.

9. Sintered composite abrasive substance according to Claim 6, characterised in that the hard substance is WC.

10. Method for preparing sintered composite abrasive substances according to one or more of Claims 1 to 9, characterised in that a conventionally prepared AI₂0₃ sol or gel is sintered with particles of hard substance.

11. Use of sintered composite abrasive substances according to one or more of Claims 1 to 9 for producing abrasive materials or grinding tools.

## Claims (Claims for the following Contracting State(s) : ES, GR)

1. Method for preapring sintered composite abrasive substance based on an α-Al₂O₃ matrix and at least one hard substance by sintering a conventionally prepared A1₂0₃ sol or gel with particles of hard substance, characterised in that the average primary crystallite size in the a-A1₂0₃ is in the range 0.1 to <1 µm, and the hard substances consist of isometric grains with an average particle size in the range 10 to 70 µm and the amount of hard substance is 1 to 30 wt.%, with reference to the sintered composite abrasive substance.

2. Method according to Claim 1, characterised in that the particle size of the hard substance is 10 to 50 pm.

3. Method according to one of Claims 1 or 2, characterised in that the a-A1₂0₃ matrix was obtained using the sol-gel process.

4. Method according to one or more of Claims 1 to 3, characterised in that the hard substances are from one or more of the compound classes comprising carbides, silicides, oxides, borides, nitrides or mixed phases of these hard substances such as oxycarbides, oxynitrides, carbonitrides, or other combinations thereof.

5. Method according to one or more of Claims 1 to 4, characterised in that the hard substances are from one or more of the groups SiC, TiB₂, AI₂0₃, TiC, AION, Si₃N₄, B₄C, TiN, TiCN, WC, Cr₃C₂, VC, AIN, WTiC, SiAION, TaC, NbC, W₂C, VMeC, TiMeC, wherein Me = metals from the groups 4a, 5a, 6a of the Periodic System of Elements, and CrAIC.

6. Method according to one or more of Claims 1 to 5, characterised in that the hard substance is from the group of carbides.

7. Method according to Claim 6, characterised in that the hard substance is SiC.

8. Method according to Claim 6, characterised in that the hard substance is TiC.

9. Method according to Claim 6, characterised in that the hard substance is WC.

10. Use of sintered composite abrasive substances according to one or more of Claims 1 to 9 for producing abrasive materials or grinding tools.

## Revendications (Revendications pour l'(les) Etat(s) contractant(s) suivant(s) : AT, CH, DE, FR, GB, IT, LI, NL, SE)

1. Corps composite fritté abrasif à base d'une gangue d'a-AI₂0₃ et d'au moins une matière dure, caractérisé en ce que la dimension de cristallite primaire moyenne de l'a-AI₂0₃ se situe dans l'intervalle de 0,1 à moins de < 1 µm et les matières dures sont à l'état de grains isométriques à des dimensions moyennes dans l'intervalle de 10 à 70 µm, et la quantité des matières dures représente de 1 à 30% du poids total du corps composite fritté abrasif.

2. Corps composite fritté abrasif selon la revendication 1, caractérisé en ce que les dimensions de bain des matières dures vont de 10 à 50 µm.

3. Corps composite fritté abrasif selon une des revendications 1 ou 2, caractérisé en ce que la gangue d'a-AI₂0₃ a été obtenue par le procédé au sol-gel.

4. Corps composite fritté abrasif selon l'une ou plusieurs des revendications 1 à 3, caractérisé en ce que les matières dures sont choisies parmi les carbures, siliciures, oxydes, borures, nitrures ou phases mixtes de ces matières dures telles que les oxycarbures, les oxynitrures, les carbonitrures, ou d'autres combinaisons de ces matières.

5. Corps composite fritté abrasif selon une ou plusieurs des revendications 1 à 4, caractérisé en ce que les matières dures sont choisies dans le groupe consistant en SiC, TiB₂, Al₂O₃, TiC, AION, Si₃N₄, B₄C, TiN, TiCN, WC, Cr₃C₂, VC, AIN, WTiC, SiAION, TaC, NbC, W₂C, VMeC, TiMeC, Me représentant des métaux des groupes 4a, 5a, 6a de la classification périodique ou CrAIC.

6. Corps composite fritté abrasif selon une ou plusieurs des revendications 1 à 4, caractérisé en ce que la mâtière dure est choisie parmi les carbures.

7. Corps composite fritté abrasif selon la revendication 6, caractérisé en ce que la matière dure consiste en SiC.

8. Corps composite fritté abrasif selon la revendication 6, caractérisé en ce que la matière dure consiste en TiC.

9. Corps composite fritté abrasif selon la revendication 6, caractérisé en ce que la matière dure consiste en WC.

10. Procédé de préparation des corps composites frittés abrasifs selon une ou plusieurs des revendications 1 à 9, caractérisé en ce que l'on fritte un sol ou gel d'A1₂0₃ préparé de la manière habituelle avec des particules de matières dures.

11. Utilisation des corps composites frittés abrasifs selon une ou plusieurs des revendications 1 à 9, pour la fabrication de produits abrasifs ou d'outils de coupe.

## Revendications (Revendications pour l'(les) Etat(s) contractant(s) suivant(s) : ES, GR)

1. Procédé de préparation de corps composites frittés abrasifs à base d'une gangue d'a-AI₂0₃ et d'au moins une matière dure par frittage d'un sol ou gel d'Al₂O₃ préparé de la manière habituelle avec des particules de matières dures, ce procédé se caractérisant en ce que la dimension de cristallite primaire moyenne de l'a-A1₂0₃ se situe dans l'intervalle de 0,1 à au moins < 1 µm et les matières dures sont à l'état de grains isométriques à des dimensions moyennes de 10 à 70 µm, la quantité des matières dures représentant de 1 à 30% du poids des corps composites frittés abrasifs.

2. Procédé selon la revendication 1, caractérisé en ce que la dimension de grain des matières dures va de 10 à 50 µm.

3. Procédé selon la revendication 1 ou 2, caractérisé en ce que la gangue d'α-Al₂O₃ a été obtenue par le procédé au sol-gel.

4. Procédé selon une ou plusieurs des revendications 1 à 3, caractérisé en ce que les matières dures sont choisies parmi les carbures, siliciures, oxydes, borures, nitrures ou phases mixtes de ces matières dures telles que les oxycarbures, les oxynitrures, les carbonitrures ou autres combinaisons de ces matières.

5. Procédé selon une ou plusieurs des revendications 1 à 4, caractérisé en ce que les matières dures sont choisies dans le groupe consistant en SiC, TiB₂, AI₂0₃, TiC, AION, Si₃N₄, B₄C, TiN, TiCN, WC, Cr₃C₂, VC, AIN, WTiC, SiAION, TaC, NbC, W₂C, VMeC, TiMeC, Me représentant des métaux des groupes 4a, 5a, 6a de la classification périodique et CrAIC.

6. Procédé selon une ou plusieurs des revendications 1 à 5, caractérisé en ce que la matière dure est choisie parmi les carbures.

7. Procédé selon la revendication 6, caractérisé en ce que la matière dure consiste en SiC.

8. Procédé selon la revendication 6, caractérisé en ce que la matière dure consiste en TiC.

9. Procédé selon la revendication 6, caractérisé en ce que la matière dure consiste en WC.

10. Utilisation des corps composites frittés abrasifs selon une ou plusieurs des revendications 1 à 9, pour la fabrication de produits abrasifs ou d'outils de coupe.
